# EUROPÄISCHE PATENTSCHRIFT

(11) **EP 4 491 373 B1**
(45) Veröffentlichungstag und Bekanntmachung des Hinweises auf die Patenterteilung: **09.12.2026**
(21) Anmeldenummer: 24186621.9
(22) Anmeldetag: 04.07.2024
(51) Int. Cl.: B29C 55/02

(54) **DÜSENKASTENVORRICHTUNG SOWIE RECKANLAGE**
NOZZLE BOX DEVICE AND STRETCHING DEVICE
DISPOSITIF DE BOÎTE À BUSES ET INSTALLATION D'ÉTIRAGE

(30) Priorität: 10.07.2023 DE 102023118120
(43) Veröffentlichungstag der Anmeldung: 15.01.2025
(73) Patentinhaber: Brückner Maschinenbau GmbH, 83313 Siegsdorf (DE)
(72) Erfinder: Wettemann, Anton, 83377 Vachendorf (DE)
(74) Vertreter: Flach Bauer & Partner Patentanwälte mbB

(56) Entgegenhaltungen:
- US-A1- 2020 108 547
- US-B2- 10 792 844

## Beschreibung

Die Erfindung betrifft eine Düsenkastenvorrichtung für einen Ofen einer Reckanlage sowie eine Reckanlage mit einem Ofen.

Reckanlagen finden insbesondere bei der Herstellung von Kunststofffolien Anwendung. Üblicherweise wird in solchen Anlagen die zu reckende Folie mittels eines Folientransportsystems in einer Abzugsrichtung durch einen Ofen der Anlage bewegt. Im Ofen wird die zu reckende Folie vor dem Reckvorgang erwärmt und auch beim, während und nach dem Reckvorgang auf einer vorbestimmten Temperatur gehalten. Anschließend wird die gereckte Folie im Ofen gekühlt.

Zum Temperieren des Ofens bzw. der Folie kommen Düsenkästen zum Einsatz, die sich in Querrichtung entlang der Folie erstrecken und die eine Vielzahl an Auslassöffnungen aufweisen, die zur Folie gerichtet sind. Durch die Düsenkästen wird temperierte Luft geführt, die durch die Auslassöffnungen in Richtung Folie strömt und diese erwärmt oder kühlt.

Solche Düsenkästen sind üblicherweise fest auf Trägern unterhalb und oberhalb der Folie montiert und äußerst schwer zugänglich. Treten Störungen im Ofen auf, die einen Ausbau einer der Düsenkästen notwendig machen, müssen häufig auch andere Düsenkästen mit entfernt werden, um zu dem gewünschten Düsenkasten zu gelangen. Hierdurch entstehen lange Stillstandzeiten der Reckanlage aufgrund der aufwändigen Entnahme der Düsenkästen aus dem Ofen.

Die US 2020/0108547 A1 offenbart Druckanpassungskammern für eine Folienreckanlage, die außerhalb des Ofens der Folienreckanlage am Eingang bzw. Ausgang des Ofens angeordnet sind. Die Position der Druckanpassungskammern ist in Hochrichtung verstellbar.

Es ist daher Aufgabe der Erfindung, eine Düsenkastenvorrichtung sowie eine Reckanlage bereitzustellen, bei denen Düsenkästen einfacher ein- und ausgebaut werden können.

Die Aufgabe wird gelöst durch eine Düsenkastenvorrichtung für einen Ofen für eine Reckanlage, insbesondere einer Quer-, Längs- und/oder Simultan-Reckanlage, mit einem Düsenkasten und einer Tragvorrichtung für den Düsenkasten. Die Tragvorrichtung weist eine erste Stütze und eine zweite Stütze auf. Der Düsenkasten ist mit der ersten Stütze und der zweiten Stütze verbunden. Die erste Stütze ist derart höhenverstellbar ausgebildet, dass der Düsenkasten zwischen einer Betriebsstellung und einer Montagestellung verstellbar ist, wobei ein erstes Ende des Düsenkastens in der Montagestellung niedriger liegt als in der Betriebsstellung.

Durch die Höhenverstellbarkeit der ersten Stütze ist es möglich, Düsenkästen einzeln seitlich, d. h. in Querrichtung zu entfernen, insbesondere entlang eines Entnahmewegs unterhalb einer der Transportschienen des Folientransportsystems. Dadurch wird eine schnelle Entnahme von Düsenkästen aus der Reckanlage bzw. eine schnelle Umrüstung der Reckanlage mit Düsenkästen ermöglicht.

Die Verbindung des Düsenkastens mit den Stützen kann auch mittelbar erfolgen.

Beispielsweise ist der Düsenkasten mit einer ersten seiner Seiten mit der ersten Stütze verbunden und mit der zweiten seiner Seiten mit der zweiten Stütze, insbesondere bezogen auf die Querrichtung (d.h. der Längsrichtung des Düsenkastens). Das erste Ende befindet sich dabei auf der ersten Seite des Düsenkastens.

Die direkte oder mittelbare Verbindung zwischen dem Düsenkasten und der ersten Stütze kann auf der ersten Seite an der Endfläche am ersten Ende des Düsenkastens, an die Endfläche angrenzend oder weiter zur Mitte hin versetzt angeordnet sein.

Die direkte oder mittelbare Verbindung zwischen dem Düsenkasten und der zweiten Stütze kann auf der zweiten Seite an der Endfläche am zweiten Ende des Düsenkastens, an die Endfläche angrenzend oder weiter zur Mitte hin versetzt angeordnet sein.

In einer Ausführungsform weist die Tragvorrichtung eine Schiene auf, auf der der Düsenkasten gelagert ist, wobei die Schiene auf einer ersten Seite mit der ersten Stütze und auf einer zweiten Seite mit der zweiten Stütze verbunden ist, wobei ein erstes Ende der Schiene in der Montagestellung niedriger liegt als in der Betriebsstellung. Auf diese Weise wird die Stabilität der Düsenkastenvorrichtung erhöht.

Denkbar ist, dass die Tragvorrichtung aus einer oder mehreren der Schienen, einer oder mehreren ersten Stützen und einer oder mehreren zweiten Stützen gebildet ist, sowie optional der Betätigungsvorrichtung.

Beispielsweise ist die Schiene mit einer ersten ihrer Seiten mit der ersten Stütze verbunden und mit der zweiten ihrer Seiten mit der zweiten Stütze, insbesondere bezogen auf die Querrichtung (d.h**.** der Längsrichtung der Schiene). Das erste Ende befindet sich dabei auf der ersten Seite der Schiene.

Die direkte oder mittelbare Verbindung zwischen der Schiene und der ersten Stütze kann auf der ersten Seite an der Endfläche am ersten Ende der Schiene, an die Endfläche angrenzend oder weiter zur Mitte hin versetzt angeordnet sein.

Die direkte oder mittelbare Verbindung zwischen der Schiene und der zweiten Stütze kann auf der zweiten Seite an der Endfläche am zweiten Ende der Schiene, an die Endfläche angrenzend oder weiter zur Mitte hin versetzt angeordnet sein.

Die Verbindung der Schiene mit den Stützen kann unmittelbar, d.h**.** direkt, oder mittelbar, z.B**.** mittels Längsstreben, erfolgen.

Denkbar ist auch, dass die Tragvorrichtung einen Rahmen aufweist, der direkt mit den Stützen verbunden ist, wobei die Schienen am Rahmen befestigt sind.

Das erste bzw. zweite Ende des Düsenkastens kann zum ersten bzw. zweiten Ende der Schiene korrespondierend ausgerichtet sein.

In einer Ausgestaltung ist die Schiene und/oder der Düsenkasten in der Betriebsstellung horizontal angeordnet, wodurch die Folie besonders gleichmäßig mit temperierter Luft angeblasen werden kann.

Die Schiene und/oder der Düsenkasten kann bei der Verstellung von der Betriebsstellung in die Montagestellung gegenüber einer Horizontalen verkippt werden, um die Entnahme weiter zu vereinfachen.

In einer Ausführungsform weist die erste Stütze zwei Schenkel auf, die aneinander schwenkbar befestigt sind und zumindest einer der Schenkel ist gegenüber der Schiene und/oder dem Düsenkasten schwenkbar, insbesondere wobei die Schenkel in der Betriebsstellung vertikal stehen und miteinander fluchten. Auf diese Weise wird eine einfache aber stabile erste Stütze bereitgestellt.

Die Schenkel können in der Betriebsposition mechanisch arretiert sein.

Zur Vereinfachung der Tragvorrichtung kann die zweite Stütze eine statische Stütze sein und/oder die Schiene und/oder der Düsenkasten, insbesondere die zweite Seite, beispielsweise das zweite Ende der Schiene und/oder des Düsenkastens, kann schwenkbar an der zweiten Stütze befestigt sein.

Unter einer statischen Stützte wird dabei verstanden, dass die Stütze nicht in der Höhe verstellbar ist. Die zweite Stütze kann somit einen Ständer aufweisen oder ein Ständer sein.

Es ist ebenfalls denkbar, dass auch die zweite Stütze höhenverstellbar ausgeführt ist. In der Montagestellung können dann beide Enden der Schienen und/oder des Düsenkastens gegenüber der Betriebsstellung niedriger liegen.

In einer Ausgestaltung ist der Düsenkasten auf der Schiene verschiebbar angeordnet und/oder über das erste Ende der Schiene von der Tragvorrichtung entnehmbar, wodurch die Entnahme und das Einsetzen des Düsenkastens weiter vereinfacht wird.

In einer Ausführungsform weist die Tragvorrichtung zwei erste Stützen und eine erste Längsstrebe auf, wobei die erste Längsstrebe die zwei ersten Stützen miteinander verbindet, wodurch die Stabilität der Tragvorrichtung verbessert wird.

Denkbar ist, dass die Längsstreben durch einen oder mehrere Querstreben verbunden sind und zusammen Teile eines Rahmens bilden.

Beispielsweise weist die Tragvorrichtung zwei zweite Stützen und eine zweite Längsstrebe auf, wobei die zweite Längsstrebe die zwei zweiten Stützen miteinander verbindet, wodurch die Stabilität der Tragvorrichtung verbessert wird.

Die Schiene und/oder der Düsenkasten kann sich quer zur ersten und/oder zweiten Längsstrebe erstrecken und/oder ist auf der ersten und/oder zweiten Längsstrebe befestigt, wodurch die Stabilität der Tragvorrichtung weiter verbessert wird.

Die Schiene und/oder der Düsenkasten ist insbesondere über die erste und/oder die zweite Längsstrebe an den ersten bzw. zweiten Stützen befestigt.

Die zweite Längsstrebe kann ein Gelenk mit einer Schwenkachse in Abzugsrichtung aufweisen. Dadurch erfolgt eine Befestigung der Schiene und/oder des Düsenkastens schwenkbar an den zweiten Stützen.

In einer Ausführungsform weist die Tragvorrichtung mehrere Schienen und/oder Düsenkästen auf, die parallel zueinander ausgerichtet sind und die auf der ersten und/oder zweiten Längsstrebe nebeneinander befestigt, wodurch mehrere Düsenkästen auf einer Tragvorrichtung aufgenommen werden können.

Zur einfachen Betätigung kann die Tragvorrichtung eine Betätigungsvorrichtung aufweisen, wobei die Betätigungsvorrichtung dazu eingerichtet ist, die Höhe der ersten Stütze zu verstellen.

Denkbar ist, dass Teile der Betätigungsvorrichtung oder die Betätigungsvorrichtung als Ganzes nicht permanent an der übrigen Tragvorrichtung befestigt sind, sondern nur bei Bedarf montiert werden. Dies bietet den Vorteil, dass weniger Betätigungsvorrichtungen benötigt werden.

Denkbar ist zudem, dass die Höhe der Stütze motorisch verstellt werden kann, die Betätigungsvorrichtung also einen Antrieb, wie einen Elektromotor oder ähnliches aufweist.

In einer Ausgestaltung ist die Betätigungsvorrichtung ein Spindelheber, der eine Gewindespindel und eine Spindelmutter aufweist, wodurch die Höhe der ersten Stütze zuverlässig verstellt werden kann.

Beispielsweise ist die Betätigungsvorrichtung auf der ersten Seite der Tragvorrichtung angeordnet. Die Spindelmutter kann an der ersten Längsstrebe befestigt sein.

In einer Ausgestaltung kann die Düsenkastenvorrichtung mehrere Düsenkästen aufweisen, insbesondere wobei die Düsenkästen parallel zueinander ausgerichtet und in Abzugsrichtung nebeneinander angeordnet sind. Dadurch können mehrere Düsenkästen gleichzeitig in die Montagestellung verfahren werden, um Stillstandzeiten der Reckanlage weiter zu verringern.

Insbesondere ist jeder Düsenkasten auf einer eigenen Schiene angeordnet. Beispielsweise sind vier Düsenkästen auf einer Tragvorrichtung vorhanden.

Zwischen zwei benachbarten Düsenkästen kann eine von den Düsenkästen separate Blende angeordnet sein und/oder ein gelochter Flügel steht an der Auslassseite des Düsenkastens in Abzugsrichtung zu einem benachbarten Düsenkasten hin ab. Durch den gelochten Flügel, der Teil des Düsenkastens ist, wird die Rüstzeit weiter verkürzt.

Die Blende ist zum Beispiel eine Lochblende oder frei von Löchern.

Die Auslassseite ist beispielsweise die Oberseite des Düsenkastens, d.h**.** die Seite aus der die Luft in Richtung Folie geblasen wird.

Beispielsweise decken die gelochten Flügel benachbarter Düsenkästen einen Zwischenraum zwischen den jeweiligen Düsenkästen vollständig ab und/oder liegen aneinander an.

In einer Ausgestaltung weist der Düsenkasten eine Vielzahl an Ausströmöffnungen auf, die an der Auslassseite des Düsenkastens vorgesehen sind, und/oder der Düsenkasten hat eine Einlassseite mit einer Lufteinlassöffnung, wobei die Einlassseite an der zweiten Seite des Düsenkastens angeordnet ist. Auf diese Weise ist eine zuverlässige und gleichmäßige Lustströmung auf die Folie gewährleistet.

Beispielsweise weist der Düsenkasten einen Grundkörper und einen Aufsatz auf, der am Grundkörper befestigt ist, wobei der Aufsatz die Ausströmöffnungen aufweist. Auf diese Weise ist der Düsenkasten flexibel einsetzbar.

Die Aufgabe wird ferner gelöst durch eine Reckanlage, insbesondere eine Quer-, Längs- und/oder Simultan-Reckanlage mit einem Folientransportsystem und einem Ofen mit einer Düsenkastenvorrichtung wie zuvor beschrieben, insbesondere wobei die Schiene und/oder der Düsenkasten quer zur Abzugsrichtung angeordnet sind.

Die zur Tragvorrichtung beschriebenen Merkmale und Vorteile gelten gleichermaßen für die Reckanlage und umgekehrt.

Die Düsenkastenvorrichtung und der Düsenkasten sind insbesondere unter dem Folientransportsystem und/oder unter der Folie angeordnet.

Der Ofen und die Tragvorrichtung weisen eine Abzugsrichtung, die der Laufrichtung der Folie im Betrieb der Reckanlage entspricht, und eine Querrichtung auf, die horizontal und quer zur Abzugsrichtung verläuft.

Zum Beispiel sind die erste Seite, die zweite Seite, das erste Ende und das zweite Ende der Schiene und/oder des Düsenkastens Seiten bzw. Enden in Querrichtung. Die erste Seite bzw. das erste Ende der Schiene und damit die erste Seite der Tragvorrichtung kann auf der sogenannten Montageseite der Reckanlage liegen.

Beispielsweise weist der Ofen ein Ofengestell auf, an dem die Tragvorrichtung befestigt ist, insbesondere die Stützen befestigt sind.

Die Gewindespindel der Betätigungsvorrichtung kann schwenkbar an dem Ofengestell oder der übrigen Tragvorrichtung befestigt sein.

In einer Ausführungsform weist das Folientransportsystem zwei Transportschienen auf, die in Querrichtung in einem Abstand voneinander angeordnet sind, wobei der Düsenkasten in der Montagestellung der Tragvorrichtung entlang eines Entnahmewegs unterhalb einer der Transportschienen aus dem Ofen entnehmbar ist, und/oder wobei der Düsenkasten in der Betriebsstellung der Tragvorrichtung zumindest teilweise innerhalb des Abstands angeordnet ist.

Insbesondere ist die Auslassseite des Düsenkastens mit den Ausströmöffnungen innerhalb des Abstands angeordnet.

In einer Ausgestaltung weist die Reckanlage eine Luftzufuhr auf, wobei die Einlassseite des Düsenkastens in der Betriebsstellung der Tragvorrichtung an die Luftzufuhr anschließt, wodurch der Düsenkasten unabhängig von der Luftzufuhr aus dem Ofen entnommen werden kann.

Weitere Vorteile und Merkmale der Erfindung ergeben sich aus der nachfolgenden Beschreibung sowie aus den beigefügten Zeichnungen, auf die Bezug genommen wird. Die Zeichnungen zeigen:
- Fig. 1:: eine Reckanlage gemäß einer Ausführungsform der Erfindung in schematischer Draufsicht,
- Fig. 2:: eine schematische Schnittansicht von Teilen der Reckanlage mit einer Düsenkastenvorrichtung gemäß einer Ausführungsform der Erfindung in Betriebsstellung,
- Fig. 3:: eine vergrößerte schematische Schnittansicht zweier benachbarter Düsenkästen der Düsenkastenvorrichtung gemäß Figur 2,
- Fig. 4:: eine schematische Schnittansicht entsprechend der Figur 2 mit der Düsenkastenvorrichtung in Montagestellung,
- Fig. 5:: eine perspektivische Ansicht einer Düsenkastenvorrichtung gemäß einer zweiten Ausführungsform der Erfindung in Montagestellung, und
- Fig. 6:: eine schematische Schnittansicht von Teilen der Reckanlage mit einer Düsenkastenvorrichtung gemäß einer dritten Ausführungsform der Erfindung in Betriebsstellung.

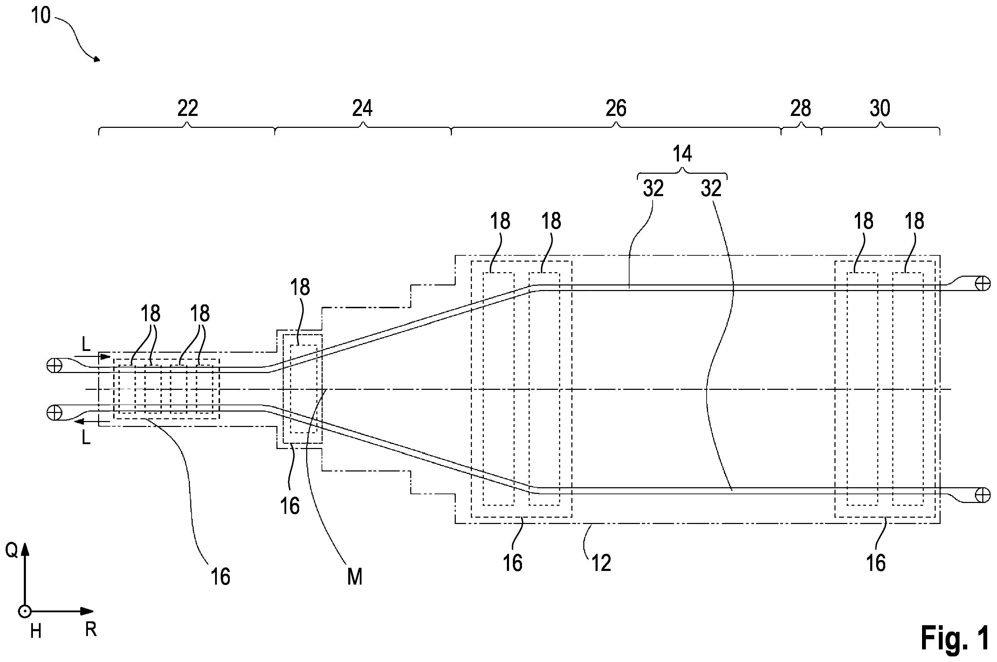

In Figur 1 ist äußerst schematisch eine Reckanlage 10 gemäß der Erfindung dargestellt.

Im gezeigten ersten Ausführungsbeispiel ist die Reckanlage eine Querreckanlage, auch TDO ("Transverse Direction Orienter") genannt. Denkbar ist auch, dass die Reckanlage eine Längs- oder Simultanreckanlage ist.

Die Reckanlage 10 weist einen Ofen 12, ein Folientransportsystem 14 und eine Düsenkastenvorrichtung 16 mit wenigstens einem Düsenkasten 18 auf.

Der Ofen 12 hat eine Abzugsrichtung R, die der Bewegungsrichtung der zu reckenden Folie F entspricht.

Quer zur Abzugsrichtung R und horizontal verläuft die Querrichtung Q des Ofens 12 und vertikal die Hochrichtung H.

Der Ofen 12 hat entlang der Abzugsrichtung R verschiedene Zonen zur Behandlung der zu reckenden Folie F.

In der ersten Zone 22, auch Vorheizzone genannt, wird die Folie F erwärmt. In der anschließenden zweiten Zone 24 ("Reckzone") wird die Folie F in Querrichtung Q gereckt, sodass sie zum Ende der zweiten Zone 24 eine größere Breite aufweist als zu Beginn.

Nach erfolgter Reckung durchläuft die Folie F dann die dritte Zone 26 ("Wärmebehandlungszone", "Weiterheizzone" und/oder "Annealingzone" genannt), bei der eine Relaxierung der Folie F bei hohen Temperaturen erfolgen kann.

Anschließend verläuft die Folie F durch eine vierte Zone 28 und eine fünfte Zone 30 ("Kühlzone"), wobei die Folie F in der fünften Zone 30 abgekühlt wird.

Die vierte Zone 28 wird Neutralzone genannt und dient zur Trennung der dritten Zone 26 und der fünften Zone 30. Die Neutralzone ist beispielsweise ein leerer Raum ohne Belüftung.

Das Folientransportsystem 14 umfasst, in an sich bekannter Weise, zwei Transportschienen 32, die gegenüber einer Mittelebene M der Reckanlage 10 bzw. des Ofens 12 spiegelsymmetrisch in einem Abstand angeordnet sind und die sich zumindest teilweise im Ofen 12 erstrecken.

In einer Einlaufzone sowie einer Auslaufzone, in denen die Folie F der Reckanlage 10 zu- bzw. abgeführt wird, verlaufen die Transportschienen 32 außerhalb des Ofens 12.

Die Folie F wird in an sich bekannter Weise durch Kluppen (nicht dargestellt) des Folientransportsystems 14, die entlang der Transportschienen 32 geführt werden, gegriffen und in Abzugsrichtung R durch den Ofen 12 transportiert.

Im Ofen sind mehrere Düsenkastenvorrichtungen 16 vorgesehen, wobei in Figur 1 der Übersicht halber die Düsenkastenvorrichtungen 16 teilweise nur angedeutet sind.

Die Düsenkastenvorrichtungen 16 dienen dazu, temperierte Luft auf die Folie F zu lenken, um die Folie F zu temperieren, also zu erwärmen oder zu kühlen.

Düsenkastenvorrichtungen 16 können daher in der ersten Zone 22, der zweiten Zone 24, der dritten Zone 26 und, zur Kühlung, auch in der fünften Zone 30 vorgesehen sein. In Figur 1 sind nicht alle Düsenkastenvorrichtungen 16 und Düsenkästen 18 der Reckanlage 10 der Übersicht halber dargestellt.

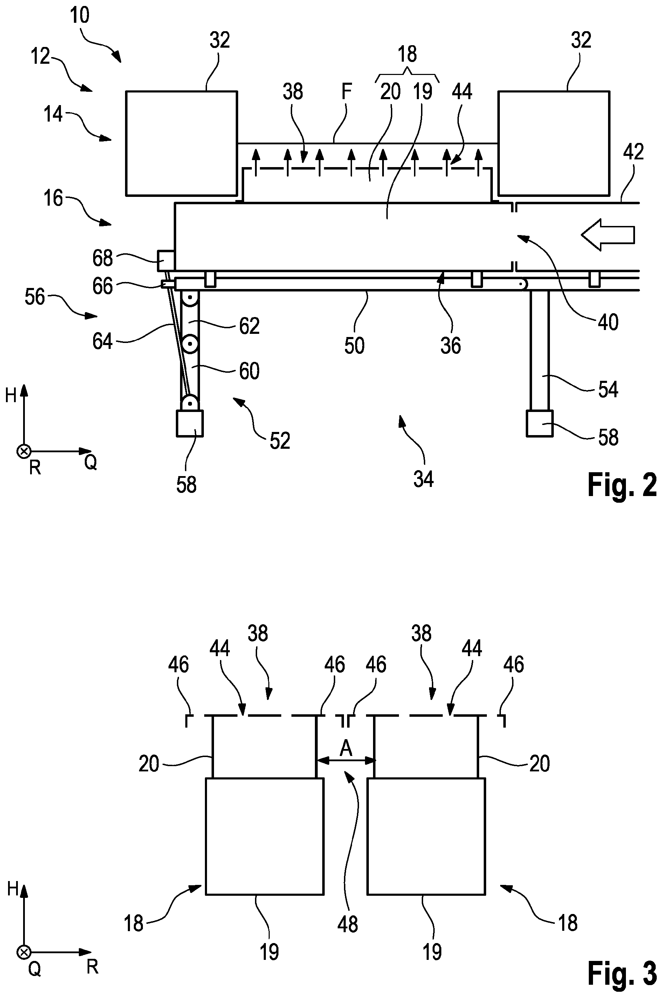

Figur 2 zeigt einen Schnitt durch die Reckanlage 10 im Bereich einer der Düsenkastenvorrichtungen 16, wobei der Übersicht halber nur wenige Teile der Reckanlage 10 gezeigt sind.

In Figur 2 ist das Folientransportsystem 14, genauer gesagt die Transportschienen 32 mit dazwischen laufender Folie F sowie die Düsenkastenvorrichtung 16 dargestellt.

Die Düsenkastenvorrichtung 16 weist eine Tragvorrichtung 34 sowie einen Düsenkästen 18 auf, der auf der Tragvorrichtung 34 befestigt ist.

In Figur 2 ist lediglich eine Tragvorrichtung 34 und ein Düsenkasten 18 sichtbar. Es sind jedoch mehrere Düsenkästen 18 vorhanden und es können auch mehrere Tragvorrichtungen 34 vorhanden sein.

Die Düsenkästen 18 sind in Querrichtung Q ausgerichtet und liegen in Abzugsrichtung R nebeneinander. Die Düsenkästen 18 sind insbesondere parallel zueinander.

Jeder der Düsenkästen 18 ist, in an sich bekannter Weise, hohl ausgeführt und weist eine Einlassseite 36 sowie eine Auslassseite 38 auf. Die Auslassseite 38 entspricht beispielsweise der Oberseite des Düsenkastens 18.

An der Einlassseite 36 hat der Düsenkasten 18 eine Lufteinlassöffnung 40, die an eine Luftzufuhr 42 der Reckanlage 10 anschließt.

An seiner Auslassseite 38 weist der Düsenkasten 18 eine Vielzahl an Ausströmöffnungen 44 auf, die der Folie F zugewandt sind.

Der Düsenkasten 18 weist eine erste Seite und ein erstes Ende (in Figur 2 links) sowie eine zweite Seite und ein zweites Ende (in Figur 2 rechts) in Querrichtung Q auf.

Die erste und die zweite Seite sind die Bereiche auf verschiedenen Seiten der Mitte des Düsenkastens 18 in Querrichtung Q (d.h. bezüglich Figur 2 links bzw. rechts von der Mitte) .

Der Düsenkasten 18 kann mehrteilig sein und einen Grundkörper 19 und einen Aufsatz 20 aufweisen.

Der Aufsatz 20 ist auf den Grundkörper 19 an seiner Oberseite aufgesetzt, wobei die Ausströmöffnungen 44 im Aufsatz 20 vorgesehen sind.

Insbesondere erstreckt sich der Grundkörper 19 nicht in den Abstand zwischen den beiden Transportschienen 32, sondern nur der Aufsatz 20 erstreckt sich in den Abstand zwischen den beiden Transportschienen 32 hinein.

Wie in Figur 2 durch die Pfeile angedeutet, kann im Betrieb der Reckanlage 10 temperierte Luft durch die Luftzufuhr 42 und die Lufteinlassöffnung 40 in den Düsenkasten 18 strömen. Die temperierte Luft wird dann durch die Ausströmöffnungen 44 gleichmäßig auf die Folie F geleitet, die hierdurch erwärmt oder gekühlt wird.

Von der Folie F rückströmende Luft kann zwischen den Düsenkästen 18 abströmen. Dies ist in Figur 3 schematisch dargestellt, in der zwei benachbarte Düsenkästen 18 in einem Schnitt entlang der Abzugsrichtung R dargestellt sind.

Benachbarte Düsenkästen 18 sind in einem Abstand A zueinander angeordnet, sodass ein Zwischenraum 48 zwischen ihnen gebildet ist, durch den die Luft abströmen kann.

An den Düsenkästen 18 sind im gezeigten Ausführungsbeispiel an der Auslassseite 38 je zwei gelochte Flügel 46 vorgesehen, die sich insbesondere über die gesamte Länge oder einen Teilbereich des Düsenkastens 18 in Querrichtung Q erstrecken.

Die Flügel 46 sind insbesondere an den Aufsätzen 20 befestigt.

Bezüglich der Abzugsrichtung R erstrecken sich die Flügel 46 in entgegengesetzte Richtungen, d.h. ein Flügel 46 erstreckt sich in Abzugsrichtung R bzw. und ein Flügel 46 erstreckt sich gegen die Abzugsrichtung R.

Die Länge jedes Flügels 46 in bzw. gegen die Abzugsrichtung R entspricht beispielsweise dem halben Abstand A der Düsenkästen 18 voneinander, sodass die zueinander weisenden Flügel 46 benachbarter Düsenkästen 18 den Zwischenraum 48 zwischen den Düsenkästen 18 vollständig abdecken, wobei etwas Spiel bzw. ein Montagespalt zwischen den Flügeln 46 vorhanden sein kann. Die Flügel 46 können auch aneinander anliegen.

Es ist denkbar, dass die Düsenkästen 18 keinen Flügel 46 aufweisen, sondern eine separate Blende - z.B. eine Lochblende oder eine ungelochte Blende - zwischen den Düsenkästen 18 vorgesehen ist, die den Zwischenraum 48 abdeckt. Auch ist es denkbar, dass der Zwischenraum 48 frei bleibt, also nicht abgedeckt ist.

Wie in Figur 2 zu sehen ist, ragen die Düsenkästen 18, genauer gesagt die Aufsätze 18b, in der Betriebsstellung in den Abstand zwischen den Transportschienen 32 des Folientransportsystems 14 hinein.

Insbesondere ist die Auslassseite 38 mitsamt den Ausströmöffnungen 44 im Abstand zwischen den beiden Transportschienen 32 angeordnet, d.h. in vertikaler Richtung und Querrichtung Q zwischen den Transportschienen 32.

Die Tragvorrichtung 34, die in Figur 2 in ihrer Betriebsstellung dargestellt ist, weist eine Schiene 50, eine erste Stütze 52, eine zweite Stütze 54 sowie eine Betätigungsvorrichtung 56 auf.

Die Schiene 50 und der Düsenkasten 18 erstrecken sich in Querrichtung Q.

Beispielsweise ist für jeden Düsenkasten 18 eine separate Tragvorrichtung 34 vorgesehen.

Der Düsenkasten 18 ist auf der Schiene 50 der Tragvorrichtung 34 verschiebbar angeordnet, sodass der Düsenkasten 18 auf der Schiene 50 in Querrichtung Q verschoben werden kann. In der Betriebsstellung ist der Düsenkasten 18 jedoch auf der Schiene 50 fixiert, um unerwünschte Bewegungen zu verhindern.

Im gezeigten Ausführungsbeispiel ist die Schiene 50 und damit der darauf angeordnete Düsenkasten 18 in der Betriebsstellung horizontal ausgerichtet.

Die Schiene 50 weist eine erste Seite mit einem ersten Ende in Querrichtung Q auf, die mit der ersten Stütze 52 verbunden ist und eine zweite Seite mit einem zweiten Ende in Querrichtung Q, die mit der zweiten Stütze 54 verbunden ist.

Die erste Seite und das erste Ende des Düsenkastens 18 korrespondieren mit der ersten Seite bzw. dem ersten Ende der Schiene 50. Ebenfalls korrespondieren die zweite Seite und das zweite Ende des Düsenkastens 18 mit der zweiten Seite bzw. dem zweiten Ende der Schiene 50.

Auf der zweiten Seite der Schiene 50 und damit der gesamten Tragvorrichtung 34 ist die Luftzufuhr 42 der Reckanlage 10 angeordnet und die Einlassseite 36 des Düsenkastens 18 ist ebenfalls zum zweiten Ende der Schiene 50 hin ausgerichtet.

Das zweite Ende der Schiene 50 ist dabei um eine Schwenkachse schwenkbar an der zweiten Stütze 54 befestigt, wobei die Schwenkachse in Abzugsrichtung R verläuft.

Die zweite Stütze 54 ist eine statische Stütze, d.h. dass die Höhe der zweiten Stütze 54 nicht verstellbar ist. Die zweite Stütze 54 kann somit als Ständer angesehen werden.

Beispielsweise ist die zweite Stütze 54 an einem Ofengestell 58 des Ofens 12 befestigt.

Es ist ebenfalls denkbar, dass auch die zweite Stütze 54 höhenverstellbar ausgeführt ist, beispielsweise identisch wie die erste Stütze 52 ausgebildet ist. In der Montagestellung können dann beide Enden der Schienen 50 gegenüber der Betriebsstellung niedriger liegen.

Die erste Stütze 52 dagegen ist höhenverstellbar ausgebildet.

Im gezeigten Ausführungsbeispiel weist die erste Stütze 52 einen ersten Schenkel 60 und einen zweiten Schenkel 62 auf.

Der erste Schenkel 60 ist mit einem seiner Enden schwenkbar am Ofengestell 58 befestigt und mit der anderen seiner Enden schwenkbar am zweiten Schenkel 62 befestigt.

Der zweite Schenkel 62 ist an seinem ersten Ende mit dem ersten Schenkel 60 und am anderen Ende schwenkbar mit der Schiene 50 verbunden.

Die Schwenkachsen dieser drei schwenkbaren Verbindungen verlaufen parallel zueinander und in Abzugsrichtung R.

Wie in Figur 2 zu erkennen, stehen die beiden Schenkel 60, 62 in der Betriebsstellung der Tragvorrichtung 34 vertikal und fluchten miteinander. Zudem können die beiden Schenkel 60, 62 in der gezeigten Betriebsstellung aneinander mechanisch arretiert sein.

Die Höhe der ersten Stütze 52, d. h**.** der Abstand zwischen dem oberen Ende des zweiten Schenkels 62 und dem unteren Ende des ersten Schenkel 60, ist daher verstellbar.

Zur Verstellung der Höhe ist die Betätigungsvorrichtung 56 vorgesehen, die im gezeigten Ausführungsbeispiel ein Spindelheber mit einer Gewindespindel 64 und einer Spindelmutter 66 ist.

Denkbar ist, dass Teile der Betätigungsvorrichtung 56 oder die Betätigungsvorrichtung 56 als Ganzes nicht permanent an der übrigen Tragvorrichtung 34 befestigt sind, sondern nur bei Bedarf an der zu betätigenden Tragvorrichtung 34 montiert werden.

Optional kann die Betätigungsvorrichtung 56 einen Antrieb 68, wie einen Elektromotor, zur Betätigung der Gewindespindel 64 aufweisen.

Sofern ein Antrieb 68 vorgesehen ist, kann die Höhenverstellung auch auf andere Weise als mittels einer Gewindespindel erfolgen.

Die Spindelmutter 66 ist fest mit der ersten Seite der Schiene 50 verbunden und die Gewindespindel 64 erstreckt sich durch die Spindelmutter 66.

Die Gewindespindel 64 ist schwenkbar mit dem Ofengestell 58 verbunden, wobei auch hier die Schwenkachse in Abzugsrichtung R verläuft.

Durch eine Betätigung der Gewindespindel 64 wird somit die Spindelmutter 66 angehoben oder abgesenkt, wodurch die Höhe der ersten Stütze 52 verändert wird.

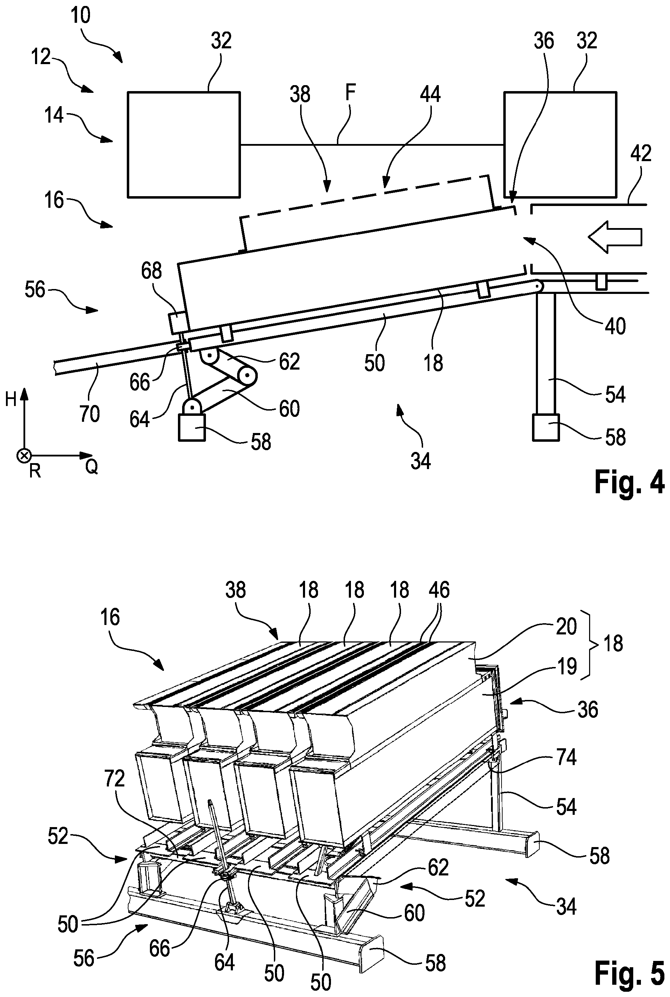

Aus der Figur 2 gezeigten Betriebsstellung kann die Tragvorrichtung 34 mittels der Betätigungsvorrichtung 56 in die in Figur 4 gezeigte Montagestellung überführt werden. Hierzu wird die Gewindespindel 64, beispielsweise mittels des Antriebs 68 betätigt, sodass sich die erste Stütze 52 verkürzt. Dadurch verschwenkt die Schiene 50 gegenüber der zweiten Stütze 54 und das erste Ende der Schiene 50 sinkt ab. Die Schiene 50 wird somit beim Übergang von der Betriebsstellung in die Montagestellung gegenüber der Horizontalen verkippt.

In der Montageposition liegt das erste Ende der Schiene 50 und damit das erste Ende des Düsenkastens 18 nun deutlich niedriger als in der Betriebsstellung, und insbesondere niedriger als das zweite Ende der Schiene 50 bzw. des Düsenkastens 18.

In dieser Montagestellung kann nun der Düsenkasten 18 von der Tragvorrichtung 34 und aus dem Ofen 12 entnommen werden.

Hierzu wird der Düsenkasten 18 unterhalb der Transportschienen 32 des Folientransportsystems 14 von der Schiene 50 der Tragvorrichtung 34 herausgeschoben.

Um dies zu vereinfachen, kann eine Hilfsschiene 70 der Reckanlage 10 an der ersten Seite der Schiene 50 befestigt werden, um den Düsenkasten 18 stufenlos befördern zu können.

Durch das Absinken der ersten Stütze wird somit ein Entnahmeweg für den Düsenkasten 18 unterhalb einer der Transportschienen 32 des Folientransportsystems 14 bereitgestellt, über den ein einzelner Düsenkasten 18 auf einfache Weise aus dem Ofen 12 der Reckanlage 10 entnommen werden kann.

Zum Einsetzen eines Düsenkastens 18 wird der Düsenkasten 18 über die Hilfsschiene 70 auf die Schiene 50 der Tragvorrichtung 34 verschoben und auf der Schiene 50 arretiert.

Dann wird die Betätigungsvorrichtung 56 abermals betätigt, die die Höhe der ersten Stütze 52 vergrößert und somit das erste Ende der Schiene 50 auf das Niveau des zweiten Endes der Schiene 50 hebt. Hierdurch wird der Düsenkasten 18 in den Abstand zwischen den beiden Transportschienen 32 des Folientransportsystems 14 eingeführt, bis die in Figur 2 gezeigte Betriebsstellung wieder erreicht ist.

In Figur 5 ist eine zweite Ausführungsform der erfindungsgemäßen Tragvorrichtung 34 dargestellt.

Die Tragvorrichtung 34 der zweiten Ausführungsform entspricht im Wesentlichen der der ersten Ausführungsform, sodass im Folgenden lediglich auf die Unterschiede eingegangen wird. Gleiche und funktionsgleiche Teile sind mit denselben Bezugszeichen versehen.

In Figur 5 ist die Tragvorrichtung 34 in Montagestellung dargestellt. Die Tragvorrichtung 34 der zweiten Ausführungsform unterscheidet sich von der Tragvorrichtung 34 der ersten Ausführungsform darin, dass die Tragvorrichtung 34 für mehrere Düsenkästen 18 gleichzeitig vorgesehen ist und dementsprechend mehrere Schienen 50 aufweist.

Es sind so viele Schiene 50 vorgesehen, wie die Tragvorrichtung 34 an Düsenkästen 18 aufnehmen soll, im gezeigten Ausführungsbeispiel sind vier Schienen 50 und vier Düsenkästen 18 vorgesehen.

Die Tragvorrichtung 34 der zweiten Ausführungsform weist zwei erste Stützen 52 auf, die über eine erste Längsstrebe 72 miteinander verbunden sind.

Die ersten Seiten der Schienen 50 sind an der ersten Längsstrebe 72 befestigt. Insbesondere liegen die Schienen 50 mit ihrem ersten Ende auf der ersten Längsstrebe 72 auf.

Außerdem hat die Tragvorrichtung 34 zwei zweite Stützen 54 und kann eine zweite Längsstrebe 74 aufweisen, die die beiden zweiten Stützen 54 miteinander verbindet.

Beispielsweise sind die zweiten Enden der Schienen 50 schwenkbar an der zweiten Längsstrebe 74 befestigt.

Die erste Längsstrebe 72 bzw. die zweite Längsstrebe 74 erstrecken sich in der Abzugsrichtung R und die Schienen 50 laufen quer zu den Längsstreben 72, 74.

Denkbar ist, dass zudem zumindest eine, beispielsweise zwei Querstreben vorgesehen sind (in Figur 5 gestrichelt dargestellt), die die Längsstreben 72, 74 verbinden. Die Tragvorrichtung 34 kann dann einen Rahmen haben, der die Längsstreben 72, 74 und die wenigstens eine Querstrebe umfasst.

Die Spindelmutter 66 der Betätigungsvorrichtung 56 ist an der ersten Längsstrebe 72 vorgesehen, insbesondere in der Mitte der ersten Längsstrebe 72 in Bezug auf die Abzugsrichtung R.

Auch in dieser Ausführungsform ist es denkbar, dass die Betätigungsvorrichtung 56 nicht permanent, d.h. lösbar an der übrigen Tragvorrichtung 34 befestigt ist.

Durch die Betätigungsvorrichtung 56 lassen sich somit die erste Längsstrebe 72 und damit die ersten Enden aller Schienen 50 gleichzeitig nach oben bzw. unten bewegen.

Die zweite Längsstrebe 74 hat Gelenke, deren Schwenkachse sich in Abzugsrichtung R erstreckt und mittels denen die schwenkbare Befestigung der zweiten Enden der Schienen 50 an den zweiten Stützen 54 erfolgt.

Die Überführung der Tragvorrichtung 34 der zweiten Ausführungsform von der Betriebsstellung in die Montagestellung und umgekehrt entspricht der zur ersten Ausführungsform erläuterten Überführung.

Mittels der Tragvorrichtung 34 der zweiten Ausführungsform lassen sich mehrere Düsenkästen gleichzeitig in die Montagestellung bringen, wodurch der Austauschprozess weiter beschleunigt wird.

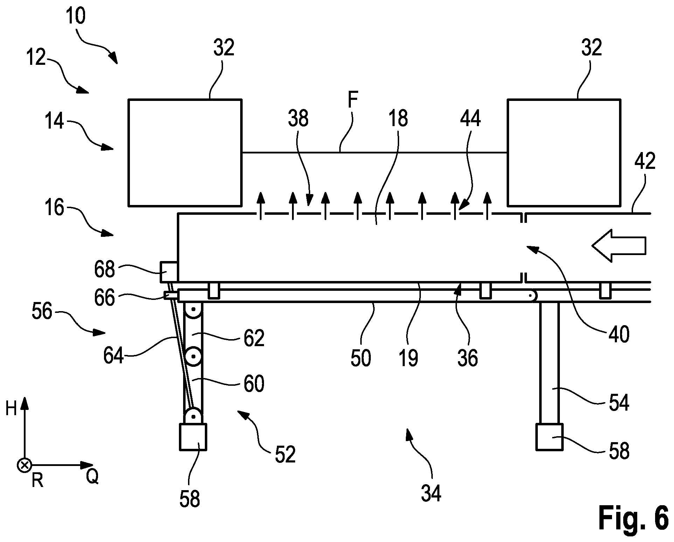

In Figur 6 ist eine weitere Ausführungsform der Erfindung dargestellt, die im Wesentlichen der der ersten Ausführungsform entspricht, sodass im Folgenden lediglich auf die Unterschiede eingegangen wird. Gleiche und funktionsgleiche Teile sind mit denselben Bezugszeichen versehen.

In der Ausführungsform nach Figur 6 ist der Düsenkasten 18 anders als in der ersten Ausführungsform ausgebildet.

Der Düsenkasten 18 weist keinen Aufsatz auf, sondern lediglich einen Grundkörper 19. Auf der Oberseite bzw. Auslassseite 38 des Grundkörpers sind die Ausströmöffnungen 44 angeordnet.

Der Düsenkasten 18 dieser dritten Ausführungsform kann dem Grundkörper 19 des Düsenkastens 18 der ersten Ausführungsform entsprechen, an dem die Ausströmöffnungen 44 vorgesehen sind.

Wie in Figur 6 zu erkennen ist, ragt der Düsenkasten 18 dieser Ausführungsform nicht in den Abstand zwischen den beiden Transportschienen 32 hinein, sondern befindet sich unterhalb der Transportschienen 32.

Flügel 46 können auch in dieser Ausführungsform wie zuvor beschrieben am Düsenkasten 18 vorgesehen sein.

## Patentansprüche

1. Düsenkastenvorrichtung für einen Ofen (12) einer Reckanlage (10), insbesondere einer Quer-, Längs- und/oder Simultan-Reckanlage, mit einem Düsenkasten (18) und einer Tragvorrichtung (34) für den Düsenkasten (18),
wobei die Tragvorrichtung (34) eine erste Stütze (52) und eine zweite Stütze (54) aufweist,
wobei der Düsenkasten (18) mit der ersten Stütze (52) und mit der zweiten Stütze (54) verbunden ist,
wobei die erste Stütze (52) derart höhenverstellbar ausgebildet ist, dass der Düsenkasten (18) zwischen einer Betriebsstellung und einer Montagestellung verstellbar ist, wobei ein erstes Ende des Düsenkastens (18) in der Montagestellung niedriger liegt als in der Betriebsstellung.

2. Düsenkastenvorrichtung nach Anspruch 1, **dadurch gekennzeichnet, dass** die Tragvorrichtung (34) eine Schiene (50) aufweist, auf der der Düsenkasten (18) gelagert ist, wobei die Schiene (50) auf einer ersten Seite mit der ersten Stütze (52) und auf einer zweiten Seite mit der zweiten Stütze (54) verbunden ist, wobei ein erstes Ende der Schiene (50) in der Montagestellung niedriger liegt als in der Betriebsstellung.

3. Düsenkastenvorrichtung nach Anspruch 1 oder 2, **dadurch gekennzeichnet, dass** die Schiene (50) und/oder der Düsenkasten (18) in der Betriebsstellung horizontal angeordnet ist; und/oder dass die Schiene (50) und/oder der Düsenkasten (18) bei der Verstellung von der Betriebsstellung in die Montagestellung gegenüber einer Horizontalen verkippt wird.

4. Düsenkastenvorrichtung nach einem der vorhergehenden Ansprüche, **dadurch gekennzeichnet, dass** die erste Stütze (52) zwei Schenkel (60, 62) aufweist, die aneinander schwenkbar befestigt sind und zumindest einer der Schenkel (62) gegenüber der Schiene (50) und/oder dem Düsenkasten (18) schwenkbar ist, insbesondere wobei die Schenkel (60, 62) in der Betriebsstellung vertikal stehen und miteinander fluchten; und/oder
dass die zweite Stütze (54) eine statische Stütze ist und/oder die Schiene (50) und/oder der Düsenkasten (18), insbesondere die zweite Seite, beispielsweise das zweite Ende der Schiene (50) und/oder des Düsenkastens (18), schwenkbar an der zweiten Stütze (54) befestigt ist.

5. Düsenkastenvorrichtung nach einem der vorhergehenden Ansprüche, **dadurch gekennzeichnet, dass** der Düsenkasten (18) auf der Schiene (50) verschiebbar angeordnet ist und/oder über das erste Ende der Schiene (50) von der Tragvorrichtung (34) entnehmbar ist.

6. Düsenkastenvorrichtung nach einem der vorhergehenden Ansprüche, **dadurch gekennzeichnet, dass** die Tragvorrichtung (34) zwei erste Stützen (52) und eine erste Längsstrebe (72) aufweist, wobei die erste Längsstrebe (72) die zwei ersten Stützen (52) miteinander verbindet, und/oder dass die Tragvorrichtung (34) zwei zweite Stützen (54) und eine zweite Längsstrebe (74) aufweist, wobei die zweite Längsstrebe (74) die zwei zweiten Stützen (54) miteinander verbindet.

7. Düsenkastenvorrichtung nach Anspruch 6, **dadurch gekennzeichnet, dass** die Schiene (50) und/oder der Düsenkasten (18) sich quer zur ersten und/oder zweiten Längsstrebe (72, 74) erstreckt und/oder auf der ersten und/oder zweiten Längsstrebe (72, 74) befestigt ist, insbesondere wobei die Tragvorrichtung (34) mehrere Schienen (50) und/oder Düsenkästen (18) aufweist, die parallel zueinander ausgerichtet sind und auf der ersten und/oder zweiten Längsstrebe (72, 74) nebeneinander befestigt sind.

8. Düsenkastenvorrichtung nach einem der vorhergehenden Ansprüche, **dadurch gekennzeichnet, dass** die Tragvorrichtung (34) eine Betätigungsvorrichtung (56) aufweist, wobei die Betätigungsvorrichtung (56) dazu eingerichtet ist, die Höhe der ersten Stütze (52) zu verstellen, insbesondere wobei die Betätigungsvorrichtung (56) ein Spindelheber ist, der eine Gewindespindel (64) und eine Spindelmutter (66) aufweist.

9. Düsenkastenvorrichtung nach einem der vorhergehenden Ansprüche, **dadurch gekennzeichnet, dass** die Düsenkastenvorrichtung (16) mehrere Düsenkästen (18) aufweist, insbesondere wobei die Düsenkästen (18) parallel zueinander ausgerichtet und in Abzugsrichtung (R) nebeneinander angeordnet sind.

10. Düsenkastenvorrichtung nach Anspruch 9, **dadurch gekennzeichnet, dass** zwischen zwei benachbarten Düsenkästen (18) eine von den Düsenkästen (18) separate Blende angeordnet ist und/oder dass ein gelochter Flügel (46) an der Auslassseite (38) des Düsenkastens (18) in Abzugsrichtung (R) zu einem benachbarten Düsenkasten (18) hin absteht.

11. Düsenkastenvorrichtung nach einem der vorhergehenden Ansprüche, **dadurch gekennzeichnet, dass** der Düsenkasten (18) eine Vielzahl an Ausströmöffnungen (44) aufweist, die an der Auslassseite (38) des Düsenkastens (18) vorgesehen sind und/oder dass der Düsenkasten (18) eine Einlassseite (36) mit einer Lufteinlassöffnung (40) hat, wobei die Einlassseite (36) an der zweiten Seite des Düsenkastens (18) angeordnet ist.

12. Düsenkastenvorrichtung nach einem der vorhergehenden Ansprüche, **dadurch gekennzeichnet, dass** der Düsenkasten (18) einen Grundkörper (19) und einen Aufsatz (20) aufweist, der am Grundkörper (19) befestigt ist, wobei der Aufsatz (20) die Ausströmöffnungen (44) aufweist.

13. Reckanlage, insbesondere eine Quer-, Längs- und/oder Simultan-Reckanlage, mit einem Folientransportsystem (14) und einem Ofen mit einer Düsenkastenvorrichtung (16) gemäß einem der vorhergehenden Ansprüche, insbesondere wobei die Schiene (50) und/oder der Düsenkasten (18) quer zur Abzugsrichtung (R)angeordnet sind.

14. Reckanlage nach Anspruch 13, **dadurch gekennzeichnet, dass** das Folientransportsystem (14) zwei Transportschienen (32) aufweist, die in Querrichtung (Q) in einem Abstand voneinander angeordnet sind, wobei der Düsenkasten (18) in der Montagestellung der Tragvorrichtung (34) über einen Entnahmeweg unterhalb einer der Transportschienen (32) aus dem Ofen (12) entnehmbar ist, und/oder wobei der Düsenkasten (18) in der Betriebsstellung der Tragvorrichtung (34) zumindest teilweise innerhalb des Abstands angeordnet ist.

15. Reckanlage nach Anspruch 13 oder 14, **dadurch gekennzeichnet, dass** die Reckanlage (10) eine Luftzufuhr (42) aufweist, wobei die Einlassseite (36) des Düsenkastens (18) in der Betriebsstellung der Tragvorrichtung (34) an die Luftzufuhr (42) anschließt.

## Claims

1. Nozzle box device for a heater (12) of a stretching device (10), in particular of a transverse, longitudinal and/or simultaneous stretching device, having a nozzle box (18) and a support device (34) for the nozzle box (18),
wherein the support device (34) has a first support (52) and a second support (54),
wherein the nozzle box (18) is connected to the first support (52) and to the second support (54),
wherein the first support (52) is height-adjustable so that the nozzle box (18) is adjustable between an operating position and a mounting position, wherein a first end of the nozzle box (18) is lower in the mounting position than in the operating position.

2. Nozzle box device according to claim 1, **characterised in that** the support device (34) has a rail (50) on which the nozzle box (18) is mounted, wherein the rail (50) is connected on a first side to the first support (52) and on a second side to the second support (54), wherein a first end of the rail (50) is lower in the mounting position than in the operating position.

3. Nozzle box device according to claim 1 or 2, **characterised in that** the rail (50) and/or the nozzle box (18) is arranged horizontally in the operating position; and/or the rail (50) and/or the nozzle box (18) is tilted against a horizontal when adjusting from the operating position to the mounting position.

4. Nozzle box device according to one of the preceding claims, **characterised in that** the first support (52) has two legs (60, 62) which are pivotally attached to one another and at least one of the legs (62) is pivotable relative to the rail (50) and/or the nozzle box (18), in particular wherein the legs (60, 62) stand vertically and are in alignment with each other in the operating position; and/or
the second support (54) is a static support and/or the rail (50) and/or the nozzle box (18), in particular the second side, for example the second end of the rail (50) and/or of the nozzle box (18), is pivotably attached to the second support (54).

5. Nozzle box device according to one of the preceding claims, **characterised in that** the nozzle box (18) is displaceably arranged on the rail (50) and/or is removeable from the support device (34) over the first end of the rail (50).

6. Nozzle box device according to one of the preceding claims, **characterised in that** the support device (34) has two first supports (52) and a first longitudinal strut (72), wherein the first longitudinal strut (72) connects the two first supports (52) to each other, and/or the support device (34) has two second supports (54) and a second longitudinal strut (74), wherein the second longitudinal strut (74) connects the two second supports (54) to each other.

7. Nozzle box device according to claim 6, **characterised in that** the rail (50) and/or the nozzle box (18) extends transversely to the first and/or second longitudinal strut (72, 74) and/or is attached to the first and/or second longitudinal strut (72, 74), in particular wherein the support device (34) has several rails (50) and/or nozzle boxes (18) which are aligned parallel to each other and are attached adjacent to each other on the first and/or second longitudinal strut (72, 74).

8. Nozzle box device according to one of the preceding claims, **characterised in that** the support device (34) has an actuating device (56), wherein the actuating device (56) is designed to adjust the height of the first support (52), in particular wherein the actuating device (56) is a screw jack containing a threaded spindle (64) and a spindle nut (66).

9. Nozzle box device according to one of the preceding claims, **characterised in that** the nozzle box device (16) has several nozzle boxes (18), in particular wherein the nozzle boxes (18) are aligned parallel to one another and are arranged adjacent to one another in the withdrawing direction (R).

10. Nozzle box device according to claim 9, **characterised in that**, a cover that is separate from the nozzle boxes (18) is arranged between two adjacent nozzle boxes (18), and/or a perforated wing (46) on the outlet side (38) of the nozzle box (18) protrudes in the withdrawing direction (R) towards an adjacent nozzle box (18).

11. Nozzle box device according to one of the preceding claims, **characterised in that** the nozzle box (18) has a plurality of outlet openings (44) which are provided on the outlet side (38) of the nozzle box (18), and/or the nozzle box (18) has an inlet side (36) having an air inlet opening (40), wherein the inlet side (36) is arranged on the second side of the nozzle box (18).

12. Nozzle box device according to one of the preceding claims, **characterised in that** the nozzle box (18) has a main body (19) and an attachment (20) which is attached to the main body (19), wherein the attachment (20) contains the outlet openings (44).

13. Stretching device, in particular a transverse, longitudinal and/or simultaneous stretching device, having a film transport system (14) and a heater having a nozzle box device (16) according to one of the preceding claims, in particular wherein the rail (50) and/or the nozzle box (18) are arranged transversely to the withdrawing direction (R).

14. Stretching device according to claim 13, **characterised in that** the film transport system (14) has two transport rails (32) which are spaced apart in the transverse direction (Q), wherein the nozzle box (18) in the mounting position of the support device (34) can be removed from the heater (12) via a withdrawal path below one of the transport rails (32), and/or wherein the nozzle box (18) in the operating position of the support device (34) is at least partially arranged within the spacing.

15. Stretching device according to claim 13 or 14, **characterised in that** the stretching device (10) has an air supply (42), wherein the inlet side (36) of the nozzle box (18) is connected to the air supply (42) in the operating position of the support device (34).

## Revendications

1. Dispositif à boîte à buses pour un four (12) d'une installation d'étirage (10), notamment une installation d'étirage transversal, longitudinal et/ou simultané, comportant une boîte à buses (18) et un dispositif de support (34) pour la boîte à buses (18),
ledit dispositif de support (34) présentant un premier montant (52) et un deuxième montant (54),
ledit boîtier de buse (18) étant relié au premier montant (52) et au deuxième montant (54),
ledit premier montant (52) étant conçu pour être réglable en hauteur de façon que la boîte à buses (18) soit réglable entre une position de service et une position de montage, une première extrémité de la boîte à buses (18) étant plus basse en position de montage qu'en position de service.

2. Dispositif à boîte à buses selon la revendication 1, **caractérisé en ce que** le dispositif de support (34) présente un rail (50) sur lequel est montée la boîte à buses (18), le rail (50) étant relié d'un premier côté au premier montant (52) et d'un deuxième côté au deuxième montant (54), une première extrémité du rail (50) étant plus basse en position de montage qu'en position de service.

3. Dispositif à boîte à buses selon la revendication 1 ou 2, **caractérisé en ce que** le rail (50) et/ou la boîte à buses (18) sont disposés horizontalement en position de service ; et/ou **en ce que** le rail (50) et/ou la boîte à buses (18) sont inclinés par rapport à l'horizontale lors du passage de la position de service à la position de montage.

4. Dispositif à boîte à buses selon l'une des revendications précédentes, **caractérisé en ce que** le premier montant (52) présente deux portions (60, 62) articulées l'une à l'autre et au moins une des portions (62) est articulée par rapport au rail (50) et/ou à la boîte à buses (18), les portions (60, 62) étant notamment verticales en position de service et en alignement l'une avec l'autre ; et/ou
**en ce que** le deuxième montant (54) est un montant statique, et/ou le rail (50) et/ou la boîte à buses (18), notamment par leur deuxième côté, par exemple la deuxième extrémité du rail (50) et/ou de la boîte à buses (18), sont fixés de manière pivotante au deuxième montant (54).

5. Dispositif à boîte à buses selon l'une des revendications précédentes, **caractérisé en ce que** la boîte à buses (18) est agencée de manière coulissante sur le rail (50) et/ou peut être retirée du dispositif de support (34) par la première extrémité du rail (50).

6. Dispositif à boîte à buses selon l'une des revendications précédentes, **caractérisé en ce que** le dispositif de support (34) présente deux premiers montants (52) et un premier longeron (72), le premier longeron (72) reliant les deux premiers montants (52) l'un à l'autre, et/ou **en ce que** le dispositif de support (34) présente deux deuxièmes montants (54) et un deuxième longeron (74), le deuxième longeron (74) reliant les deux deuxièmes montants (54) l'un à l'autre.

7. Dispositif à boîte à buses selon la revendication 6, **caractérisé en ce que** le rail (50) et/ou la boîte à buses (18) s'étendent transversalement au premier et/ou au deuxième longeron (72, 74) et/ou sont fixés au premier et/ou au deuxième longeron (72, 74), le dispositif de support (34) présentant notamment plusieurs rails (50) et/ou boîtes à buses (18) alignés parallèlement les uns aux autres et fixés côte à côte au premier et/ou au deuxième longeron (72, 74).

8. Dispositif à boîte à buses selon l'une des revendications précédentes, **caractérisé en ce que** le dispositif de support (34) présente un dispositif d'actionnement (56), lequel dispositif d'actionnement (56) est conçu pour ajuster la hauteur du premier montant (52), ledit dispositif d'actionnement (56) étant notamment un vérin à broche présentant une broche filetée (64) et un écrou de broche (66).

9. Dispositif à boîte à buses selon l'une des revendications précédentes, **caractérisé en ce que** le dispositif à boîte à buses (16) présente plusieurs boîtes à buses (18), lesdites boîtes à buses (18) étant notamment alignées parallèlement les unes aux autres et disposées côte à côte dans la direction de retrait (R).

10. Dispositif à boîte à buses selon la revendication 9, **caractérisé en ce qu'**un déflecteur espacé des boîtes à buses (18) est disposé entre deux boîtes à buses (18) adjacentes et/ou **en ce qu'**une aile perforée (46) fait saillie, côté sortie (38) de la boîte à buses (18), vers une boîte à buses (18) adjacente dans la direction de retrait (R).

11. Dispositif à boîte à buses selon l'une des revendications précédentes, **caractérisé en ce que** la boîte à buses (18) présente une pluralité d'ouvertures de sortie (44) prévues sur le côté sortie (38) de la boîte à buses (18) et/ou **en ce que** la boîte à buses (18) possède un côté entrée (36) doté d'une ouverture d'entrée d'air (40), ledit côté entrée (36) étant agencé sur le deuxième côté de la boîte à buses (18).

12. Dispositif à boîte à buses selon l'une des revendications précédentes, **caractérisé en ce que** la boîte à buses (18) présente un corps de base (19) et une rehausse (20) fixée au corps de base (19), ladite rehausse (20) présentant les ouvertures de sortie (44).

13. Installation d'étirage, notamment installation d'étirage transversal, longitudinal et/ou simultané, comportant un système de transport de film (14) et un four doté d'un dispositif à boîte à buses (16) selon l'une des revendications précédentes, ledit rail (50) et/ou ladite boîte à buses (18) étant notamment agencés transversalement à la direction de retrait (R).

14. Installation d'étirage selon la revendication 13, **caractérisée en ce que** le système de transport de film (14) présente deux rails de transport (32) agencés selon un écart l'un par rapport à l'autre dans la direction transversale (Q), ladite boîte à buses (18) pouvant, dans la position de montage du dispositif de support (34), être retirée du four (12) sur une voie de retrait située sous l'un des rails de transport (32), et/ou la boîte à buses (18) étant, dans la position de service du dispositif de support (34), au moins partiellement agencée à l'intérieur dudit écart.

15. Installation d'étirage selon la revendication 13 ou 14, **caractérisée en ce que** l'installation d'étirage (10) présente une alimentation en air (42), le côté entrée (36) de la boîte à buses (18) étant rattaché à l'alimentation en air (42) dans la position de service du dispositif de support (34).
